# EUROPÄISCHE PATENTSCHRIFT

(11) **EP 2 176 465 B1**
(45) Veröffentlichungstag und Bekanntmachung des Hinweises auf die Patenterteilung: **12.01.2011**
(21) Anmeldenummer: 08773448.9
(22) Anmeldetag: 16.06.2008
(51) Int. Cl.: E01B 35/00

(54) **VERFAHREN ZUR VERMESSUNG EINER GLEISLAGE**
METHOD FOR MEASURING A TRACK POSITION
PROCÉDÉ DE MESURE DE GÉOMÉTRIE DE VOIE

(30) Priorität: 31.07.2007 AT 11972007
(43) Veröffentlichungstag der Anmeldung: 21.04.2010
(73) Patentinhaber: Franz Plasser Bahnbaumaschinen-Industriegesellschaft m.b.H., 1010 Wien (AT)
(72) Erfinder: THEURER, Josef, A-1010 Wien (AT); LICHTBERGER, Bernhard, A-4230 Pregarten (AT)
(86) Internationale Anmeldenummer: PCT/EP2008/004812
(87) Internationale Veröffentlichungsnummer: WO 2009/015728

(56) Entgegenhaltungen:
- DE-A1- 4 222 333
- US-A- 5 157 840
- US-B2- 7 050 926

## Beschreibung

Die Erfindung betrifft ein Verfahren zur Vermessung einer Gleislage gemäß dem Hauptanspruch.

Durch US 7 050 926 ist ein derartiges Verfahren bekannt, wobei ein Gleismeßwagen mit einem Laserempfänger in Richtung zu einem örtlich stillstehenden Vorwagen bewegt wird. Dabei wird ein Laserstrahl abgetastet, der von einem am Vorwagen positionierten Lasersender gebildet wird. Die ermittelten Korrekturwerte für das Gleis werden aufgezeichnet und zur Durchführung einer Gleislagekorrektur an eine Stopfmaschine weitergegeben.

Durch US 5 090 329 ist eine Gleisvermessung bekannt, die mit einem einer Stopfmaschine zugeordneten Messsystem durchgeführt wird. Dieses umfasst einen in Arbeitsrichtung vor der Stopfmaschine positionierten, unabhängig verfahrbaren Vorwagen mit einem Lasersender. Der Stopfmaschine ist ein Laserempfänger zugeordnet, der sich auf einem vorderen Ende eines maschineneigenen Bezugsystems befindet.

Der Vorwagen wird zur Erfassung der Lage eines Fixpunktes in Nähe zu diesem aufgestellt und eine vom Lasersender gebildete Langsehne in eine Soll-Lage gebracht. Anschließend arbeitet die Stopfmaschine in Richtung zum stillstehenden Vorwagen. Anschließend wird der Vorwagen zum nächsten Fixpunkt verfahren und erneut eine Langsehne gebildet. Schließlich ist durch US 5 157 840 noch ein Meßsystem bekannt, bei dem die Langsehne dem Messwagen folgt und dabei permanent eine Winkeländerung der Langsehne zum örtlich stillstehenden Vorwagen gemessen wird. Über die Winkelmessung wird die Differenz zwischen Ist- und Solllage des Gleises errechnet.

Die Aufgabe der vorliegenden Erfindung liegt nun in der Schaffung eines Verfahrens der eingangs genannten Art, mit dem vor allem in Gleisbögen auch bei fehlenden Fixpunktwerten eine Optimierung der Gleislagemessung erzielbar ist.

Diese Aufgabe wird erfindungsgemäß mit einem Verfahren der gattungsgemäßen Art durch die im Kennzeichen des Hauptanspruches angeführten Merkmale gelöst.

Mit einer derartigen Winkelmessung ist es nunmehr möglich, auch in Gleisbögen ohne Fixpunktdaten ein zusammenhängendes Ortsbild der räumlichen Lage des gesamten Gleisbogens zu erhalten. Der besondere Vorteil liegt nun darin, dass für die Korrektur der Ist-Lage des Gleisbogens ein mehrere Meßabschnitte umfassender langwelliger Fehlerausgleich durchführbar ist. Außerdem kann alternativ in Verbindung mit einer nachträglichen Erfassung von Fixpunkten auch eine Absolutlage und Vermarkung des Gleises erzielt werden.

Weitere Vorteile der Erfindung ergeben sich aus den Unteransprüchen und der Zeichnungsbeschreibung.

Im folgenden wird die Erfindung anhand eines in der Zeichnung dargestellten Ausführungsbeispieles näher beschrieben. Es zeigen:

Fig. 1 eine schematische Seitenansicht eines Gleismeßwagens mit einem Vormeßwagen zur Aufmessung eines Meßabschnittes, und

Fig. 2, 3 je eine Darstellung zweier aufeinanderfolgender Meßabschnitte.

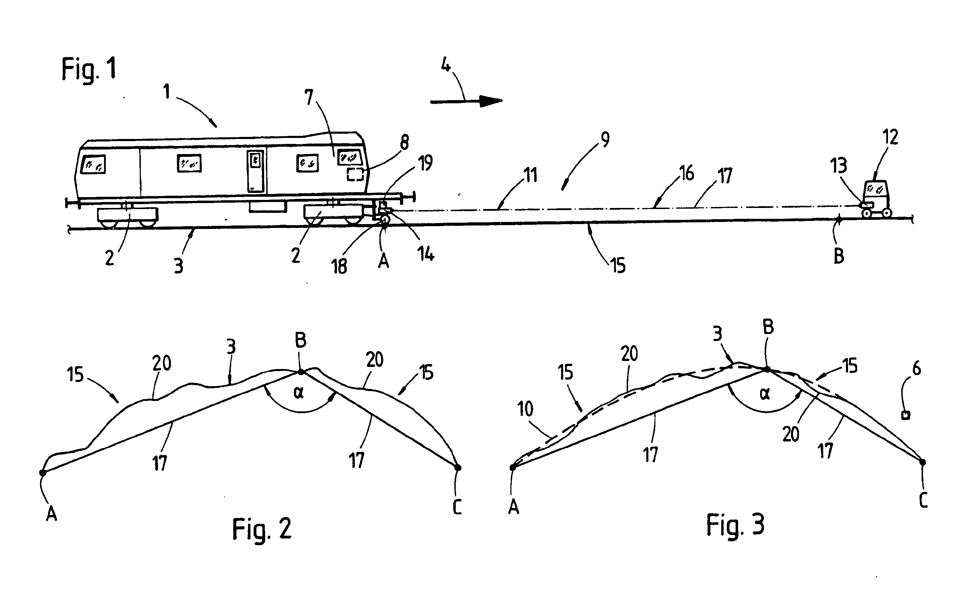

Ein in Fig. 1 dargestellter Gleismeßwagen 1 ist über Schienenfahrwerke 2 auf einem Gleis 3 in einer Arbeitsrichtung 4 verfahrbar. In einer vorderen Fahrkabine 7 befindet sich eine Steuer- und Recheneinheit 8.

Ein Messsystem 9 zur Erfassung der Gleislage besteht aus einem Laser-Bezugsystem 11. Dieses weist einen auf dem Gleis 3 unabhängig verfahrbaren Vormeßwagen 12 mit einem Lasersender 13 auf. Diesem ist ein Laserempfänger 14 zugeordnet, der sich auf einer vorderen Messachse 18 des Gleismeßwagens 1 befindet. Auf dieser Messachse 18 ist auch ein Inertial-Meßsystem (IMU) 19 angeordnet.

Ein Meßabschnitt 15 ist einerseits durch einen Punkt A begrenzt, an dem der Gleismeßwagen 1 unter Zuhilfenahme einer durch einen Laserstrahl 16 des Lasersenders 13 gebildeten Langsehne 17 die Abtastung des Gleises 3 beginnt. Der Meßabschnitt 15 ist andererseits beendet (s. Punkt B), sobald der Gleismeßwagen 1 unter laufender Erfassung von Ist-Lage-Daten den örtlich stillstehenden Vormeßwagen 12 erreicht hat.

Fig. 2 zeigt zwei aufeinander folgende Meßabschnitte 15 des Gleises 3, die durch die Punkte A,B bzw. B,C begrenzt sind. Jeder Meßabschnitt 15 beinhaltet eine Langsehne 17 und eine Ist-Lage 20 des Gleises 3. Wenn der Gleismeßwagen 1 am Punkt A die Meßfahrt startet, werden mit Hilfe des Inertial-Messsystems 19 die Raumkoordinaten für den Punkt A registriert und in der Recheneinheit 8 abgespeichert. Nachdem auch die Raumkoordinaten für die Punkte B und C registriert wurden, erfolgt die Berechnung eines Winkels α, der von den beiden aufeinanderfolgenden Langsehnen 17 eingeschlossen wird.

Mit dieser laufenden Winkelmessung kann durch Integration das Ortsbild bzw. der Lageverlauf des Gleises 3 in Höhe, Richtung und Querneigung mit den entsprechenden Raumkoordinaten berechnet werden. Die damit ermittelte, sich über mehrere Messabschnitte 15 erstreckende räumliche Ist-Lage 20 des Gleises 3 wird anschließend rechnerisch - sowohl bezüglich der Höhen- als auch Seitenlage - durch Überlagerung einer langwelligen Ausgleichskurve 10 geglättet (s. Fig. 3). Dazu könnte in weiterer Folge z.B. über eine Länge von beispielsweise 100m ein gleitender Spline berechnet werden. Dies hätte zur Folge, dass Fehlerwellenlängen bis 100m problemlos eliminierbar sind. Die Ausgleichskurve 10 ergibt die Soll-Lage für eine später durchzuführende Gleislagekorrektur durch eine Stopfmaschine. Die abgespeicherten Daten können beispielsweise durch eine Disc oder durch Funkübertragung an eine Stopfmaschine übergeben werden.

Parallel zur Aufmessung der Gleislage kann in vorteilhafter Weise auch eine Aufmessung von Fixpunkten 6 erfolgen, die in die ermittelte Ausgleichskurve 10 integriert werden.

## Patentansprüche

1. Verfahren zur Vermessung einer Gleislage, die relativ zu einer durch einen Laserstrahl (16) gebildeten Langsehne (17) als Bezugsgerade eines Messsystems (9) unter Bildung aufeinanderfolgender Messabschnitte (15) registriert wird, wobei ein Messabschnitt (15) einerseits durch den Beginn einer Messfahrt (Punkt A) eines Gleismesswagens (1) und andererseits durch das Ende der Messfahrt (Punkt B) begrenzt ist, wonach ein während der Messfahrt örtlich am Gleis stillstehender Vormesswagen (12) unter Distanzierung vom Gleismesswagen (1) zur Bildung eines angrenzenden Messabschnittes (15) vorgefahren wird, der mit dem Abschluss (Punkt C) der nächstfolgenden Messfahrt des Gleismesswagens (1) beendet ist, **dadurch gekennzeichnet, dass** ein durch die beiden Langsehnen (17) zweier aufeinanderfolgender Meßabschnitte (15) eingeschlossener Winkel α durch ein die Raumkoordinaten der Langsehnen (17) registrierendes Inertial-Meßsystem (19) gemessen wird, und dass die einzelnen Messabschnitte (15) unter Zuhilfenahme der jeweiligen Werte der Winkelmessung zu einem räumlichen Ortsbild zusammengefügt werden.

2. Verfahren nach Anspruch 1, **dadurch gekennzeichnet, dass** über mehrere aufeinanderfolgende Meßabschnitte (15) eine langwellige Ausgleichskurve (10) als Gleis-Solllage errechnet wird.

## Claims

1. A method for measuring a track position which is registered relative to a long chord (17), formed by a laser beam (16), as reference line of a measuring system (9) while forming successive measurement sections (15), wherein a measurement section (15) is delimited, on the one hand, by the start of a measuring run (point A) of a track measuring car (1) and, on the other hand, by the conclusion of the measuring run (point B), after which a satellite measuring trolley (12) which is stationary locally on the track during the measuring run is moved forward, while being distanced from the track measuring car (1), for forming an adjoining measuring section (15) which is finished with the conclusion (point C) of the next following measuring run of the track measuring car (1), **characterized in that** an angle α, enclosed by the two long chords (17) of two successive measurement sections (15), is measured by an inertial measuring system (19) registering the space coordinates of the long chords (17), and that the individual measurement sections (15) are joined together with the aid of the respective values of the angle measurement to form a spatial location image.

2. A method according to claim 1, **characterized in that** a long-wave compensation curve (10), yielding the target position of the track, is computed over several successive measurement sections (15).

## Revendications

1. Procédé de mesure d'une assiette de la voie qui est enregistrée par rapport à une corde longitudinale (17) formée par un rayon laser (16) en tant que droite de référence d'un système de mesure (9) en formant des segments de mesure successifs (15), dans lequel un segment de mesure (15) est limité d'un côté par le début d'un trajet de mesure (point A) d'une voiture d'auscultation de la voie (1) et de l'autre côté par la fin du trajet de mesure (point B), après quoi une voiture de mesure préalable (12) immobile de manière locale sur la voie pendant le trajet de mesure est avancée avec écartement de la voiture d'auscultation de la voie (1) pour former un segment de mesure adjacent (15) qui se termine par la fin (point C) du trajet de mesure suivant de la voiture d'auscultation de la voie (1), **caractérisé en ce qu'**un angle α inclus par les deux cordes longitudinales (17) de deux segments de mesure successifs (15) est mesuré par un système de mesure inertiel (19) enregistrant les coordonnées spatiales des cordes longitudinales (17), et que les segments de mesure individuels (15) sont assemblés en une représentation spatiale au moyen des valeurs respectives de la mesure angulaire.

2. Procédé selon la revendication 1, **caractérisé en ce qu'**une courbe de compensation de grande longueur d'onde (10) est calculée en tant qu'assiette de consigne de la voie par le biais de plusieurs segments de mesure successifs (15).
